# EUROPÄISCHE PATENTSCHRIFT

(11) **EP 2 828 142 B1**
(45) Veröffentlichungstag und Bekanntmachung des Hinweises auf die Patenterteilung: **18.05.2016**
(21) Anmeldenummer: 13717155.9
(22) Anmeldetag: 04.03.2013
(51) Int. Cl.: B62D 21/11

(54) **ACHSTRÄGER FÜR EIN FAHRZEUG, INSBESONDERE FÜR EIN KRAFTFAHRZEUG, SOWIE VERFAHREN ZUR HERSTELLUNG EINES DERARTIGEN ACHSTRÄGERS**
AXLE SUPPORT FOR A VEHICLE, IN PARTICULAR FOR A MOTOR VEHICLE, AND METHOD FOR PRODUCING SUCH AN AXLE SUPPORT
SUPPORT D'ESSIEU POUR VÉHICULE, NOTAMMENT POUR VÉHICULE À MOTEUR ET PROCÉDÉ DE FABRICATION D'UN TEL SUPPORT D'ESSIEU

(30) Priorität: 22.03.2012 DE 102012005857
(43) Veröffentlichungstag der Anmeldung: 28.01.2015
(73) Patentinhaber: Audi AG, 85045 Ingolstadt (DE)
(72) Erfinder: LEIBL, Peter, 85077 Manching (DE)
(86) Internationale Anmeldenummer: PCT/EP2013/000613
(87) Internationale Veröffentlichungsnummer: WO 2013/139432

(56) Entgegenhaltungen:
- DE-A1-102006 017 225
- DE-A1-102007 030 929

## Beschreibung

Die Erfindung betrifft einen Achsträger für ein Fahrzeug, insbesondere für ein Kraftfahrzeug, nach dem Oberbegriff des Anspruchs 1 sowie ein Verfahren zur Herstellung eines Achsträgers für ein Fahrzeug, insbesondere für ein Kraftfahrzeug, nach dem Oberbegriff des Anspruchs 11.

Derartige Achsträger, auch Hilfsrahmen oder Fahrschemel genannt, sind allgemein bekannt und bestehen regelmäßig aus zwei, im montierten Zustand des Achsträgers im Wesentlichen in Fahrzeuglängsrichtung ausgerichteten Längsträgern, die miteinander über wenigstens einen, im Wesentlichen in Fahrzeugquerrichtung ausgerichteten Querträger miteinander verbunden sind. Der Oberflächenschutz bei Achsträgern aus einem Stahlmaterial wird in der Regel durch eine kathodische Tauchlackierung hergestellt. Liegen Bereiche des Achsträgers, wie insbesondere ein in Fahrtrichtung vorderer Querträger des Achsträgers, im Strahlbereich der durch die Fahrzeugreifen aufwirbelnden Partikel, werden besondere Oberflächenschutzmaßnahmen getroffen, um diesen Achsträgerbereich vor einer Beschädigung zu schützen. Hierfür ist es allgemein bekannt, zum Beispiel Kunststoffschutzschalen am Achsträger anzubringen. Des Weiteren ist eine sehr teure komplette Verzinkung des Achsträgers allgemein bekannt. Verzinkte Einzelteile werden dagegen nicht verschweißt, da durch die komplexen Geometrien der umgeformten Bauteile die beim Schweißen entstehenden Zinkdämpfe nicht entweichen können und Gaseinschlüsse in den Schweißnähten zur Folge haben. Derartige Gaseinschlüsse bilden Poren in Schweißnähten aus, die wiederum zu großen Lebensdauerschwankungen der Schweißnähte führen und daher für Sicherheitsbauteile, wie dies Achsträger sind, nicht geeignet sind.

Aus der gattungsbildenden DE 10 2007 030 929 B9 ist bereits ein Achsträger für Kraftfahrzeuge bekannt, der zwei Längsträger und zwei die Längsträger miteinander verbindende Querträger aufweist, wobei die beiden Querträger, ebenso wie die Längsträger durch miteinander verschweißte Blechschalen gebildet sein können. Insbesondere soll der in Fahrtrichtung gesehen vordere Querträger durch eine vordere und eine hintere Blechschale gebildet sein, wobei eine vordere Blechschale durch mindestens drei miteinander verschweißte Bleche derart gebildet ist, dass diese vordere Blechschale zwei äußere Abschnitte aufweist, die mit den Längsträgern verbunden sind, wobei ein die äußeren Abschnitte miteinander verbindender Mittelabschnitt eine geringere Blechdicke aufweist bzw. aus einem Werkstoff mit geringerer Festigkeit hergestellt ist als die äußeren Blechteile. Diese vordere Blechschale ist somit als Tailored-Blank-Blechbauteil gefertigt, um einen Querträger mit optimierten Gewichts- und Materialeigenschaften zur Verfügung zu stellen. Das Gleiche kann auch im Bereich der Längsträger und im Bereich des zweiten Querträgers analog der Fall sein. Bei allen derartig in Schalenbauweise hergestellten Querträgern und Längsträgern können zudem bereits vorbeschichtete Bleche verwendet werden, das heißt Bleche, die mit einer Zinklegierung oder einer Aluminiumlegierung oberflächenbeschichtet sind. Dadurch ergeben sich jedoch die zuvor bereits genannten Nachteile, nämlich, dass es beim Verschweißen derartiger verzinkter Einzelteile zu Gaseinschlüsse und damit zu in den Schweißnähten kommt, was dann zu einer Lebensdauerreduzierung der Schweißnähte führen kann.

Die Verwendung von Tailored-Blank-Blechbauteilen, wie vorstehend in Verbindung mit der DE 10 2007 030 929 B9 beschrieben, ist allgemein bekannt. Dabei handelt es sich um passend auf den jeweiligen technischen Anwendungsfall maßgeschneiderte, aus mehreren ebenen und miteinander verschweißten Blechzuschnitten gebildete Blechplatinen bzw. Blechplatten. Die einzelnen Blechzuschnitte weisen unterschiedliche Blechdicken auf und/oder bestehen aus Werkstoffen mit unterschiedlichen Festigkeiten. Aus diesen ebenen Tailored-Blank-Blechplatten werden dann durch Umformung die gewünschten Formbauteile gefertigt. Die einzelnen Blechzuschnitte des Tailored-Blank-Bauteil sind dabei so zueinander angeordnet, dass bei dem umgeformten Formbauteil in genau vorbestimmten Bereichen jeweils der Blechzuschnitt angeordnet ist, welcher die für diesen Bereich gewünschte Materialstärke bzw. Werkstofffestigkeit aufweist. So werden die weniger stark belasteten Bauteilbereiche zum Beispiel durch Blechzuschnitte mit einer geringeren Blechdicke gebildet als die stärker belasteten Bauteilbereiche. Auf diese Weise werden somit belastungsgerecht dimensionierte und konstruierte Bauteile erzeugt, die ein optimiertes Gesamtgewicht aufweisen, wie dies bei der DE 10 2007 030 929 B9 der Fall ist.

Es gibt unterschiedliche Tailored-Blank-Arten bzw. -Verfahren, so zum Beispiel das TRB (Tailored Rolled Blank), bei dem das Blechband (Coil) erneut kaltgewalzt wird, um unterschiedliche Blechdicken zu erzeugen. Beim Tailored-Welded-Blank-Verfahren (TWB-Verfahren) werden dagegen die einzelnen Blechplatinen aneinander geschweißt. Dies erfolgt in der Regel als Stumpfstoß mittels Laserschweißen.

Demgegenüber ist es Aufgabe der vorliegenden Erfindung, einen Achsträger für ein Fahrzeug, insbesondere für ein Kraftfahrzeug, zur Verfügung zu stellen, der einen hohen Oberflächenschutz aufweist und zudem auch eine qualitativ hochwertige Anbindung des wenigstens einen Querträgers am Längsträger zur Verfügung stellt. Des Weiteren ist es eine Aufgabe der vorliegenden Erfindung, ein Verfahren zur Herstellung eines derartigen Achsträgers zur Verfügung zu stellen, bei dem die Anbindung des wenigstens einen Querträgers an den Längsträgern in qualitativ hochwertiger Weise erfolgt.

Diese Aufgabe wird gelöst mit den Merkmalen der unabhängigen Patentansprüche. Vorteilhafte Ausgestaltungen hierzu sind Gegenstand der darauf rückbezogenen Unteransprüche.

Gemäß Anspruch 1 wird ein Achsträger für ein Fahrzeug, insbesondere für ein Kraftfahrzeug, vorgeschlagen, der zwei Längsträger sowie wenigstens einen die beiden Längsträger miteinander verbindenden Querträger aufweist. Dieser wenigstens eine Querträger ist vorzugsweise im Wesentlichen in Fahrzeugquerrichtung ausgerichtet, wobei der wenigstens eine Querträger oder wenigstens einer der Querträger als mehrteiliges Tailored-Blank-Bauteil ausgebildet ist und mit seinen in Querträgerlängsrichtung gegenüberliegenden seitlichen Querträgeranbindungsbereichen mittels wenigstens einer Schweißverbindung am jeweils zugeordneten Längsträger fest angebunden ist. Zudem ist der Querträger bereichsweise mit einer Oberflächenbeschichtung als Schutzschicht, insbesondere mit einer Zinkschicht, versehen. Erfindungsgemäß sind die seitlichen Querträgeranbindungsbereiche jeweils durch ein unbeschichtetes, insbesondere unverzinktes, ein- oder mehrteiliges Blechbauteil gebildet, wobei der sich an die beiden seitlichen Querträgeranbindungsbereiche anschließende Querträgermittenbereich durch ein ein- oder mehrteiliges Blechbauteil gebildet ist, das wenigstens an seiner im montierten Zustand des Achsträgers der Fahrbahn zugewandten Unterseite wenigstens bereichsweise mit der Oberflächenbeschichtung, zum Beispiel mit einer Zinkschicht, versehen ist.

Die Begrifflichkeit "unbeschichtet" ist im vorliegenden Fall so zu verstehen, dass der Querträger in diesem Bereich keine Beschichtung mit einem Material bzw. Werkstoff aufweist, das bzw. der beim Schweißvorgang zur Ausbildung von Gasen oder Dämpfen neigt, die im Bereich der Schweißnaht eingeschlossen werden und dort Gaseinschlüsse bzw.Poren ausbilden könnten. Konkret weisen diese Bereiche dann zum Beispiel keine metallische und/oder chemisch bzw. galvanisch aufgebrachte Oberflächenbeschichtung auf, das heißt zum Beispiel keine Zinkschicht bzw. Zinklegierungsschicht oder keine Leichtmetalllegierungsschicht, wie beispielsweise eine Aluminiumlegierungsschicht, auf.

Dementsprechend ist die im Querträgermittenbereich vorgesehene Oberflächenbeschichtung, die insbesondere eine Schutzschicht gegen aufwirbelnde Partikel, wie zum Beispiel Steine, Dreck oder dergleichen, ausbildet, im Sinne der vorliegenden Erfindungsidee bevorzugt eine chemisch und/oder galvanisch aufgebrachte Oberflächenbeschichtung, die im aufgebrachten Zustand eine feste Verbindung mit der zu beschichtenden Oberfläche eingeht. Insbesondere liegt dabei das Beschichtungsmaterial vor der Beschichtung flüssig oder gasförmig oder auch pulverförmig vor und wird in diesem Zustand auch auf die zu beschichtende Werkstückoberfläche aufgebracht, so dass sich dann zum Beispiel durch Trocknen bzw. durch Eingehen einer chemischen Verbindung mit der Oberfläche des zu beschichtenden Materials erst am Bauteil selbst die gewünschten Oberflächenbeschichtungen als Schutzschichten ausbilden. Beispielsweise kann die Aufbringung derartiger Oberflächenbeschichtungen durch Tauchbäder, durch Elektrolyte oder aber auch durch das Aufsprühen bzw. Bestäuben der Oberflächen erfolgen. Bei den so aufgebrachten Oberflächenbeschichtungen handelt es sich weiter vorteilhaft um metallische Schutzschichten.

Mit einer derartigen erfindungsgemäßen Lösung kann somit zum einen der gewünschte Oberflächenschutz gegen zum Beispiel durch Fahrzeugreifen aufgewirbelte Partikel zur Verfügung gestellt werden, ohne dass hierfür teure Kunststoffschutzschalen am Achsträger angebracht werden müssen und ohne dass hierfür eine komplette sehr teure Gesamtstückverzinkung erforderlich ist. Darüber hinaus können die unbeschichteten bzw. unverzinkten Seitenbereiche des Querträgers aufgrund der erfindungsgemäßen Lösung einfach und ohne die eingangs genannte Problematik der Gaseinschlüsse und Porenbildung durch Zinkdämpfe an die jeweils zugeordneten Längsträger angeschweißt werden, was dementsprechend zu einer hohen Lebensdauer der Schweißnähte und damit zu einer hochwertigen Anbindung der Querträger an den Längsträgern führt.

Denn die Verbindung dieser unbeschichteten bzw. unverzinkten Seitenbereiche des Querträgers mit dem wenigstens einen oberflächenbeschichteten bzw. verzinkten Mittenbereich des Querträgers durch Schweißen erfolgt, wie bei Tailored-Blank-Blechbauteilen üblich, bei der Herstellung des der Umformvorrichtung zuzuführenden ebenen Bauteils, bei der ebene Blechplatten bzw. Blechplatinen miteinander verschweißt werden. Bei diesem Verschweißen der ebenen Blechplatinen bzw. Blechplatten können die beim Verschweißen des oberflächenbeschichteten bzw. verzinkten Blechbauteils entstehenden Dämpfe sehr gut entweichen, so dass es hier zu keinem Gaseinschluss und damit zu keiner Porenbildung in den Schweißnähten kommen kann. Dementsprechend sind gemäß einer besonders bevorzugten konkreten Ausgestaltung die beiden seitlichen Querträgeranbindungsbereiche jeweils Bestandteil eines unbeschichteten, insbesondere unverzinkten, und/oder umgeformten Blechbauteils, die jeweils mit einem, den Mittenbereich ausbildenden, wenigstens bereichsweise beschichteten, insbesondere verzinkten, und/oder umgeformten Blechbauteil fest verschweißt sind.

Um gewichtsgünstig, kostenoptimiert sowie bedarfsgerecht und belastungsgerecht ausgebildete Querträgerausgestaltungen zu erzielen, kann vorgesehen sein, dass die einzelnen, miteinander verbindbaren Blechplatten bzw. Blechplatinen wenigstens zum Teil eine unterschiedliche Materialstärke und/oder eine unterschiedliche Werkstofffestigkeit aufweisen.

Für einen insgesamt hervorragenden Oberflächenschutz ist vorgesehen, dass das wenigstens eine den Querträgermittenbereich ausbildende Blechbauteil vollständig oberflächenbeschichtet, insbesondere vollverzinkt, ist.

Gemäß einer weiteren besonders bevorzugten konkreten Ausgestaltung ist vorgesehen, dass der Achsträger mehrere, insbesondere zwei, Querträger aufweist, die die beiden, im montierten Zustand des Achsträgers im Wesentlichen in Fahrzeuglängsrichtung ausgerichteten Längsträger miteinander verbinden, wobei lediglich der in Fahrtrichtung vordere Querträger mit einer Oberflächenbeschichtung versehen ist. Bei einer derartigen Konstruktion wird somit lediglich der besonders kritische und oberflächenbeanspruchte Bereich des Achsträgers oberflächenbeschichtet, was dazu führt, dass die Oberflächenbeschichtung bzw. die Verzinkung insgesamt kostenreduziert aufgebracht werden kann.

Besonders bevorzugt ist dabei weiter eine Ausgestaltung, bei der die Längsträger wenigstens in einem, den Querträgeranbindungsbereich zugeordneten Längsträgerbereich aus einem unbeschichteten, insbesondere unverzinkten, Material hergestellt sind. Dadurch wird sichergestellt, dass im gesamten Anbindungsbereich von Längsträger und Querträger keinerlei Gaseinschlüsse bewirkende Dämpfe, wie zum Beispiel Zinkdämpfe, auftreten können, wodurch die Qualität der Schweißnähte noch weiter erhöht wird.

Gemäß einer hierzu besonders konkreten Ausgestaltung kann vorgesehen sein, dass wenigstens einer der Längsträger, bevorzugt beide Längsträger, ein- oder mehrteilig und/oder aus einem Blechmaterial hergestellt ist bzw. sind. Besonders bevorzugt kann der wenigstens eine Längsträger als Tailored-Blank-Bauteil durch mehrere umgeformte und miteinander verbundene, insbesondere miteinander verschweißte Blechbauteile gebildet sein, die vorzugsweise wenigstens zum Teil eine unterschiedliche Materialstärke und/oder Werkstofffestigkeit aufweisen.

Die Oberflächenbeschichtung selbst ist bevorzugt metallisch ausgebildet, zum Beispiel durch eine Aluminiumlegierung. Besonders bevorzugt ist die Schutzschicht jedoch durch eine Zinkschicht gebildet, die wiederum durch eine reine Zinkschicht oder durch eine Zinklegierungsschicht gebildet sein kann.

An dieser Stelle sei weiter nochmals ausdrücklich erwähnt, dass die seitlichen Querträgeranbindungsbereiche regelmäßig eine von einer ebenen Geometrie abweichende Formgebung aufweisen, zum Beispiels jeweils durch einen aus einer Querträger- bzw. Plattenebene herausgebogenen und/oder abgewinkelten und/oder umgebördelten und/oder ein Hohlprofil ausbildenden und/oder einer Hinterschnittgeometrie ausbildenden Umformungs-Teilbereich gebildet sind. In derartigen umgeformten und nicht ebenen Querträgeranbindungsbereichen ist die Gefahr des Einschlusses von Zinkdämpfen als Poren in Schweißnähte bei einer Verwendung von verzinkten Querträgeranbindungsbereichen relativ groß, was mit der erfindungsgemäßen Lösung, bei der die beiden seitlichen Querträgeranbindungsbereiche keine Oberflächenbeschichtung bzw. Zinkbeschichtung aufweisen, in der zuvor geschilderten Weise, insbesondere bei derartigen komplexen, von der ebenen Plattengeometrie abweichenden Geometrien bzw. Formgebungen, vermieden werden kann.

Die Aufgabe wird bezüglich des Verfahrens gelöst mit den Merkmalen des Patentanspruchs 11.

Gemäß Patentanspruch 11 wird ein Verfahren zur Herstellung eines Achsträgers für ein Fahrzeug, insbesondere für ein Kraftfahrzeug, vorgeschlagen, bei dem die beiden seitlichen Querträgeranbindungsbereiche des wenigstens einen Querträgers oder wenigstens eines der Querträger jeweils durch eine unbeschichtete, insbesondere unverzinkte, ebene Blechplatte bzw. Blechplatine gebildet sind, die vor dem Umformen des Querträgers in dessen endgültige Form mit einer den Mittenbereich ausbildenden, die Oberflächenbeschichtung, insbesondere eine Zinkschicht, aufweisenden ebenen Blechplatte verbunden, insbesondere verschweißt werden. Dadurch kann der Umformvorrichtung eine, ein Vormaterial ausbildende, ebene Umform-Blechplatine als Bauteilverbund mehrerer ebener Blechplatten mit unbeschichteten, insbesondere unverzinkten, Seitenbereichen und einem wenigstens bereichsweise oberflächenbeschichteten, insbesondere verzinkten, Mittenbereich zugeführt werden. Die ebene Umform-Blechplatine wird anschließend in der Umformvorrichtung, insbesondere einer Tiefzieh- und/oder Pressvorrichtung, ein- oder mehrstufig in die endgültige Form umgeformt. Anschließend wird der so hergestellte Querträger mit seinen durch die unbeschichteten, insbesondere unverzinkten, Seitenbereiche ausgebildeten Querträgeranbindungsbereichen an den jeweils zugeordneten Längsträgern angeschweißt.

Mit einer derartigen Verfahrensführung ergeben sich die zuvor bereits in Verbindung mit dem Achsträger genannten Vorteile.

Die Erfindung wird nachfolgend anhand einer Zeichnung näher erläutert.

Es zeigen:
- Fig. 1: die Bauteile einer beispielhaften Ausführungsform eines erfindungsgemäßen Achsträgers im noch nicht miteinander verbundenen Zustand.
- Fig. 2: die Bauteile des Achsträgers gemäß Fig. 1 im miteinander verbundenen Zustand, und
- Fig. 3: schematisch und perspektivisch die Verbindung zweier seitlicher, unverzinkter Blechzuschnitte/Blechplatten mit einer verzinkten, mittleren sowie ebenen Blechplatte/Blechzuschnitt, bei der die Verzinkungsdämpfe, die beim Schweißen entstehen, ungehindert entweichen können und keine Gaseinschlüsse ausbilden.

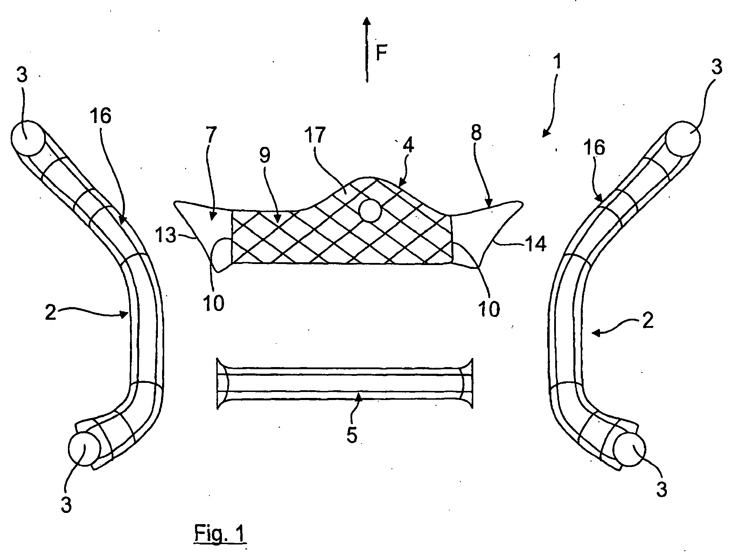

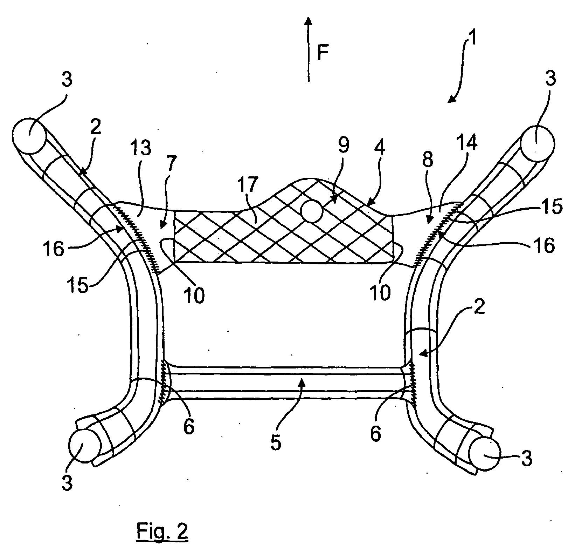

Die Fig. 1 und 2 zeigen eine beispielhafte Ausführungsform eines erfindungsgemäßen Achsträgers 1 für ein hier nicht weiter dargestelltes Fahrzeug, insbesondere ein Kraftfahrzeug, wie beispielsweise einen Pkw. Dieser Achsträger weist zwei im Wesentlichen in Fahrtrichtung F ausgerichtete Längsträger 2 auf, die an in Fahrtrichtung F gegenüberliegenden Enden jeweils Anbindungsstellen 3 aufweisen, an denen der Achsträger zum Beispiel über Gummi-Metall-Lager mit der Karosserie verbunden ist, was hier aber nicht im Detail dargestellt ist.

Die beiden Längsträger 2 können zum Beispiel aus einem unverzinkten Stahlwerkstoff hergestellt sein, zum Beispiel durch unverzinkte Tailored-Blank-Blechbauteile gebildet sein, was hier aber ebenfalls nicht weiter dargestellt ist. Alternativ dazu können die Längsträger 2 aber auch einstückig aus einem Stahlwerkstoff hergestellt sein, zum Beispiel durch Gussteile gebildet sein.

Die beiden Längsträger 2 sind quer zur Fahrtrichtung F und damit in Fahrzeugquerrichtung gesehen über zwei voneinander in Fahrtrichtung F beabstandete Querträger 4, 5 verbunden, was insbesondere aus der Fig. 2 ersichtlich ist, die den fertig montierten Zustand des Achsträgers 1 zeigt. Konkret ist der hier in Fahrtrichtung F hintere Querträger zum Beispiel durch ein Umform-Blechbauteil aus einem unverzinkten Blechmaterial hergestellt, der im Bereich seiner Enden mit dem jeweils zugeordneten Längsträger 2 durch Schweißnähte 6 fest verbunden ist.

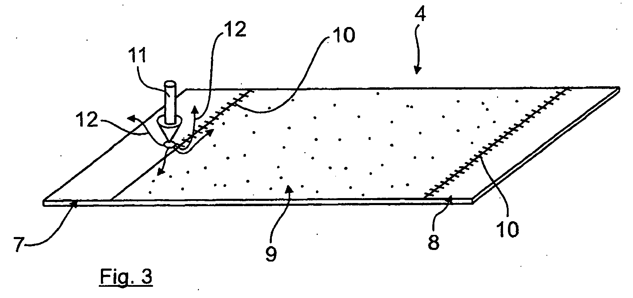

Der in Fahrtrichtung F vordere Querträger 4 weist hier eine spezielle Ausgestaltung auf, die nachfolgend auch unter Bezugnahme auf die Fig. 3 näher erläutert wird:
Der Querträger 4 ist aus einem Tailored-Welded-Blank-Blechbauteil gebildet, das im Ausgangszustand, wie dies in der Fig. 3 dargestellt ist, zwei seitliche, unverzinkte ebene Blechplatten 7, 8 aufweist, die mittels einer mittleren, ebenen Blechplatte 9 durch Schweißnähte 10 verbunden sind. Die mittlere Blechplatte 9 ist durch eine verzinkte Blechplatte gebildet, die an ihrer Außenseite bzw. Oberfläche mit einer Zinkschicht, zum Beispiel einer reinen Zinkschicht oder einer Zinklegierungsschicht beschichtet ist.

Wie dies aus der Fig. 3 lediglich schematisch ersichtlich ist, können - beim Herstellen der Schweißnähte 10 zwischen den seitlichen, unverzinkten Blechplatten 7, 8 und der verzinkten mittleren Blechplatte 9 mittels einer hier nur äußert schematisch dargestellten Schweißvorrichtung 11 - die durch das Verdampfen der Zinkbeschichtung entstehenden Zinkdämpfe 12 aufgrund der ebenen Anordnung der Blechplatten 7, 8, 9 sehr gut in die Umgebung entweichen, so dass es zu keinen Gaseinschlüssen in den Schweißnähten 10 kommt und die Schweißnähte 10 somit mit einer hervorragenden Schweißnahtqualität hergestellt werden können.

Neben dem Unterschied in der Beschichtung bzw. Verzinkung können die einzelnen Blechplatten 7, 8, 9 auch mit unterschiedlichen Wandstärken bzw. Materialstärken und/oder mit unterschiedlichen Werkstoffeigenschaften, insbesondere Werkstofffestigkeiten ausgebildet sein, was hier aber nicht dargestellt ist.

Im hier gezeigten Ausführungsbeispiel ist die mittlere Blechplatte 9 vorzugsweise vollständig verzinkt. Grundsätzlich könnte die Blechplatte 9 aber auch lediglich auf einer Seite oder wenigstens in einem oder mehreren Teilbereichen verzinkt sein, je nach dem Oberflächenschutz-Anforderungsprofil der jeweils zu lösenden Konstruktionsaufgabe.

Der wie soeben beschriebene, ebene Bauteilverbund aus den drei Blechplatten 7, 8, 9 wird anschließend einer hier nicht gezeigten Umformvorrichtung zugeführt, zum Beispiel einer Tiefziehvorrichtung und/oder einer Pressvorrichtung, in der dieser Bauteilverbund in die in der Fig. 1 in einer Draufsicht schematisch gezeigte Geometrie des Querträgers 4 umgeformt wird, die insbesondere im Bereich der Querträgeranbindungsbereiche 13, 14 Umbiegeungen, Hinterschneidungen, Hohlräume und dergleichen aufweisen kann, was hier jedoch aus Übersichtlichkeitsgründen nicht dargestellt ist.

Wie dies der Fig. 1 weiter entnommen werden kann, bilden die unverzinkten Blechplatten 7, 8, nunmehr unverzinkte seitliche Querträgeranbindungsbereiche 13, 14 aus, die, wie in der Fig. 2 dargestellt, mittels einer oder mehrerer Schweißnähte 15 fest mit den hier ebenfalls unverzinkten Längsträger-Anschlussbereichen 16 der Längsträger 2 verbunden werden.

Dadurch, dass diese seitlichen Querträgeranbindungsbereiche 13, 14 durch umgeformte, unverzinkte Blechplatten 7, 8 gebildet sind, können die Schweißnähte 15 mit sehr hoher Schweißnahtqualität hergestellt werden, weil es durch die fehlende Zinkbeschichtung dieses Querträgerbereiches zu keinem Einschluss von Zinkdämpfen und damit zu keiner unerwünschten Bildung von Poren kommen kann.

An dieser Stelle sei nochmals ausdrücklich erwähnt, dass die seitlichen Querträgeranbindungsbereiche 13, 14 im in der Fig. 1 und 2 dargestellten Zustand eine komplexe, von einer ebenen Plattengeometrie abweichende Geometrie aufweisen, die durch Umbiegungen und/oder Hinterschneidungen oder dergleichen von einer ebenen Plattengeometrie abweichende Geometrien gebildet sind, welche komplexen, von der ebenen Plattengeometrie abweichenden Geometrien bei verzinkten Querträgeranbindungsbereichen regelmäßig zu einem Gaseinschluss in den Schweißnähten führt, da die entstehenden Zinkdämpfe aufgrund der komplexen Geometrien nicht in die Umgebung entweichen können bzw. nicht schnell genug in die Umgebung entweichen können.

Des Weiteren ist aber durch den durch die mittlere Blechplatte 9 gebildeten verzinkten, das heißt mit einer Zinkbeschichtung 17 versehenen Mittenbereich des Querträgers 4, der in der Fig. 1 und 2 durch eine Kreuzschraffur dargestellt ist, ein ausreichender Oberflächenschutz für zum Beispiel von der Fahrbahn aufgewirbelte Partikel, wie beispielsweise Steine oder dergleichen, ausgebildet.

## Patentansprüche

1. Achsträger für ein Fahrzeug, insbesondere für ein Kraftfahrzeug,
mit zwei Längsträgern (2) sowie wenigstens einem die beiden Längsträger (2) miteinander verbindenden Querträger (4), wobei der wenigstens eine Querträger (4) oder wenigstens einer der Querträger (4) als mehrteiliges Tailored-Blank-Bauteil ausgebildet ist und mit seinen in Querträgerlängsrichtung gegenüberliegenden seitlichen Querträgeranbindungsbereichen (13, 14) mittels wenigstens einer Schweißverbindung (15) am jeweils zugeordneten Längsträger (2) fest angebunden ist, und wobei der Querträger (4) mit einer Oberflächenbeschichtung (17) als Schutzschicht, insbesondere mit einer Zinkschicht, beschichtet ist,
**dadurch gekennzeichnet,**
**dass** die seitlichen Querträgeranbindungsbereiche (13, 14) jeweils durch ein unbeschichtetes, insbesondere unverzinktes, ein- oder mehrteiliges Blechbauteil (7, 8) gebildet sind, und dass der sich an die beiden seitlichen Querträgeranbindungsbereiche (13, 14) anschließende Querträgermittenbereich durch ein ein- oder mehrteiliges Blechbauteil (9) gebildet ist, das wenigstens an seiner im montierten Zustand des Achsträgers (1) der Fahrbahn zugewandten Unterseite wenigstens bereichsweise mit der Oberflächenbeschichtung (17), insbesondere einer Zinkschicht, beschichtet ist.

2. Achsträger nach Anspruch 1, **dadurch gekennzeichnet, dass** die beiden seitlichen Querträgeranbindungsbereiche (13, 14) jeweils Bestandteil eines unbeschichteten, insbesondere unverzinkten und/oder, umgeformten Blechbauteils (7, 8) sind, die jeweils mit einem den Mittenbereich ausbildenden, wenigstens bereichsweise oberflächenbeschichteten, insbesondere verzinkten, und/oder umgeformten Blechbauteil (9) fest verbunden, insbesondere verschweißt, sind.

3. Achsträgers nach Anspruch 2, **dadurch gekennzeichnet, dass** die miteinander verbundenen Blechbauteile (7, 8, 9) jeweils durch Blechplatten gebildet sind, die gemeinsam als Bauteilverbund, insbesondere mittels Tiefziehen und/oder Pressen, in die Querträger-Endgeometrie umgeformt sind.

4. Achsträger nach Anspruch 3, **dadurch gekennzeichnet, dass** die einzelnen, miteinander verbundenen Blechplatten (7, 8, 9) wenigstens zum Teil eine unterschiedliche Materialstärke und/oder eine unterschiedliche Werkstofffestigkeit aufweisen.

5. Achsträger nach einem der vorhergehenden Ansprüche, **dadurch gekennzeichnet, dass** das wenigstens eine den Querträgermittenbereich ausbildende Blechbauteil (9) vollständig oberflächenbeschichtet, insbesondere vollverzinkt, ist.

6. Achsträger nach einem der vorhergehenden Ansprüche, **dadurch gekennzeichnet, dass** der Achsträger (1) mehrere, insbesondere zwei, Querträger (4, 5) aufweist, die die beiden, im montierten Zustand des Achsträgers im Wesentlichen in Fahrzeuglängsrichtung ausgerichteten Längsträger (2) miteinander verbinden, wobei lediglich der in Fahrtrichtung vordere Querträger (4) mit einer Oberflächenbeschichtung (17) versehen ist.

7. Achsträger nach einem der vorhergehenden Ansprüche, **dadurch gekennzeichnet, dass** die Längsträger (2) wenigstens in einem, dem Querträgeranbindungsbereich (13, 14) zugeordneten Längsträgerbereich aus einem unbeschichteten, insbesondere unverzinkten, schweißbaren Material hergestellt sind.

8. Achsträger nach Anspruch 7, **dadurch gekennzeichnet, dass** wenigstens einer der Längsträger (2) ein- oder mehrteilig und/oder aus einem Blechmaterial hergestellt ist, insbesondere als Tailored-Blank-Bauteil durch mehrere umgeformte und miteinander verbundene Blechbauteile gebildet ist, die vorzugsweise wenigstens zum Teil eine unterschiedliche Materialstärke und/oder Werkstofffestigkeit aufweisen.

9. Achsträger nach einem der vorhergehenden Ansprüche, **dadurch gekennzeichnet, dass** die Oberflächenbeschichtung (17) eine metallische Oberflächenbeschichtung ist und/oder dass die Oberflächenbeschichtung (17) eine chemisch und/oder galvanisch auf die zu beschichtende Bauteiloberfläche aufgebrachte Oberflächenbeschichtung ist, wobei bevorzugt vorgesehen ist, dass die Oberflächenbeschichtung (17) durch eine Zinkschicht, insbesondere eine reine Zinkschicht oder eine Zinklegierungsschicht, oder durch eine Leichtmetalllegierungsschicht, insbesondere eine Aluminiumlegierungsschicht, gebildet ist.

10. Achsträger nach einem der vorhergehenden Ansprüche, **dadurch gekennzeichnet, dass** wenigstens einer der seitlichen Querträgeranbindungsbereiche (13, 14) eine von einer ebenen Geometrie abweichende Formgebung aufweist, insbesondere jeweils durch einen aus einer Querträger- und/oder Plattenebene herausgebogenen und/oder abgewinkelten und/oder umgebördelten und/oder ein Hohlprofil aufweisenden und/oder eine Hinterschnittgeometrie aufweisenden Umformungs-Teilbereich gebildet ist.

11. Verfahren zur Herstellung eines Achsträgers für ein Fahrzeug, insbesondere für ein Kraftfahrzeug, nach einem der vorhergehenden Ansprüche,
**dadurch gekennzeichnet,**
**dass** die beiden seitlichen Querträgeranbindungsbereiche (13, 14) des wenigstens einen Querträgers (4) oder wenigstens eines der Querträger (4) jeweils durch eine unbeschichtete, insbesondere unverzinkte, ebene Blechplatte (7, 8) gebildet sind, die vor dem Umformen, insbesondere einem Tiefziehen und/oder Verpressen, des Querträgers (4) in seine endgültige Form mit einer den Mittenbereich ausbildenden, die Oberflächenbeschichtung (17), insbesondere eine Zinkschicht, aufweisenden ebenen Blechplatte (9) verbunden, insbesondere verschweißt werden dergestalt, dass der Umformvorrichtung eine, ein Vormaterial ausbildende, ebene Umform-Blechplatine als Bauteilverbund mehrerer ebener Blechplatten (7, 8, 9) mit unbeschichteten, insbesondere unverzinkten, Seitenbereichen und einem wenigstens bereichsweise oberflächenbeschichteten, insbesondere verzinkten, Mittenbereich zugeführt wird,
**dass** die ebene Umform-Blechplatine als Bauteilverbund der mehreren ebenen Blechplatten (7, 8, 9) in der Umformvorrichtung, insbesondere einer Tiefzieh- und/oder Pressvorrichtung, ein- oder mehrstufig in die endgültige Form umgeformt wird, und
**dass** der so hergestellte Querträger (4) mit seinen, durch die unbeschichteten, insbesondere unverzinkten, Seitenbereiche ausgebildeten Querträgeranbindungsbereichen (13, 14) an den jeweils zugeordneten Längsträger (2) angeschweißt wird.

## Claims

1. Axle beam for a vehicle, more particularly a motor vehicle, with two longitudinal beams (2) as well as at least one transverse beam (4) connecting the two longitudinal beams (2) to each other, wherein at least one transverse beam (4) or at least one of the transverse beams (4) is designed in the form of a multi-part tailored blank component and with its lateral transverse beam connection sections (13, 14), which are opposite each other in the longitudinal direction of the transverse beam, is firmly connected by means of a weld connection (15) to each assigned longitudinal beam (2), and wherein the transverse beam (4) is coated with a surface coating (17) as a protection coating, more particularly with a zinc coating,
**characterised in that** the lateral transverse beam connection sections (13, 14) are each formed of an uncoated, more particularly, ungalvanised, multi-part metal sheet component (7, 8), and **in that** the transverse beam middle sections adjoining the two lateral transverse beam connection sections (13, 14) is formed by a single or multiple-part sheet metal component (9) which least on its underside facing the roadway in the assembled condition of the axle beam (1), is at least in parts coated with the surface coating (17), more particularly a zinc coating.

2. Axle beam according to claim 1 **characterised in that** the two lateral transverse beam connection sections (13, 14) are each part of an uncoated, more particularly ungalvanised, and/or formed sheet metal part (7, 8) which are firmly connected, more particularly welded to an at least partially surface-coated, more particularly galvanised and/or formed sheet metal part (9) which forms the middle section.

3. Axle beam according to claim 2 **characterised in that** the sheet metal parts (7, 8, 9) connected to each other are each formed by sheet metal plates which are jointly formed as a component composite, more particularly by deep-drawing and/or pressing into the transverse beam end geometry.

4. Axle beam according to claim 3 **characterised in that** the individual metal sheets (7, 8, 9) which are connected to each other, at least in parts have a different material thickness and/or a different material strength.

5. Axle beam according to any one of the preceding claims **characterised in that** at least one metal sheet part (9) forming the transverse beam middle section is completely surface-coated, more particularly fully galvanised.

6. Axle beam according to any one of the preceding claims **characterised in that** the axle beam (1) has several, more particularly two, transverse beams (4, 5), which, in the assembled condition of the axle beam connect the longitudinal beams (2) essentially aligned in the longitudinal direction of the vehicle, wherein only the forward transverse beam (4) in the direction of travel is provided with a surface coating (17).

7. Axle beam according to any one of the preceding claims, **characterised in that** the longitudinal beam (2) is, at least in a longitudinal beam section assigned to the transverse beam connection section (13, 14), made of an uncoated, more particularly ungalvanised, weldable material.

8. Axle beam according to claim 7 **characterised in that** at least one of the longitudinal beams (2) is produced in one or more pieces and/or of a sheet metal material, more particularly as a tailored blank component through several sheet metal components that are shaped and connected to each other and preferably have, at least in parts, a different thickness and/or material strength.

9. Axle beam according to any one of the preceding claims **characterised in that** the surface coating (17) is a metallic surface coating and/or **in that** the surface coating (17) is a surface coating chemically and/or galvanically applied to the component surface to be coated, wherein it is preferably envisaged that the surface coating (17) is formed by a zinc layer, more particularly a pure zinc layer or a zinc alloy layer or by a light metal alloy layer, more particularly an aluminium alloy layer.

10. Axle beam according to any one of the preceding claims **characterised in that** at least one of the lateral transverse beam connection sections (13, 14) has a shape deviating from a flat geometry, more particularly is formed through a partial shaping area which is bent out of and/or angled from and/or flanged on a transverse beam and/plate plane and/or having a hollow profile and/or an undercut geometry.

11. Method of producing an axle beam for a vehicle, more particularly a motor vehicle, according to any one of the preceding claims, **characterised in that**
the two lateral transverse beam connection sections (13, 14) of at least one transverse beam (4) or at least one of the transverse beams (4) are each formed by a uncoated, more particularly ungalvanised, flat metal sheet plate (7, 8), which before shaping, more particularly through deep-drawing and/or pressing, of the transverse beam (4) into its definitive shape are connected, more particularly welded, to a flat sheet metal plate (9) forming the middle section and exhibiting the surface coating (17), more particularly a zinc coating, in such a way that a flat shaping sheet metal plate in the form of a component composite of several flat metal plates (7, 8, 9) with uncoated, more particularly ungalvanised, side sections and an at least partially surface-coated, more particularly galvanised section, is supplied to the shaping device,
that the flat shaping sheet metal plate, as a component composite of the several metal sheet plates (7, 8, 9), is shaped in the shaping device, more particularly a deep-drawing and/or pressing device into its definitive shape in one or more stages and
that the thus produced transverse beam (4) is welded to the assigned longitudinal beam (2) with its transverse beam connection sections (13, 14) formed by the uncoated, more particularly ungalvanised side sections.

## Revendications

1. Support d'essieu pour un véhicule, notamment pour un véhicule automobile,
avec deux longerons (2) ainsi qu'au moins une traverse (4) reliant les deux longerons (2) entre eux, l'au moins une traverse (4) ou au moins l'une des traverses (4) étant conçue comme une pièce de flan sur mesure en plusieurs parties et étant fixée, par ses zones latérales de fixation de traverse (13, 14) à l'opposé l'une de l'autre dans le sens de la longueur de la traverse, au longeron (2) respectivement associé au moyen d'au moins une soudure (15) et la traverse (4) étant revêtue d'un revêtement de surface (17) comme couche de protection, notamment d'une couche de zinc,
**caractérisé en ce que** les zones latérales de fixation de traverse (13, 14) sont formées chacune par une pièce de tôle (7, 8) non revêtue, notamment non galvanisée, en une ou plusieurs parties et **en ce que** la zone centrale de traverse qui fait suite aux deux zones latérales de fixation de traverse (13, 14) est formée par une pièce de tôle (9) en une ou plusieurs parties qui est revêtue au moins sur son dessous proche de la chaussée lorsque le support d'essieu (1) est monté, au moins par endroits, du revêtement de surface (17), notamment d'une couche de zinc.

2. Support d'essieu selon la revendication 1, **caractérisé en ce que** les deux zones latérales de fixation de traverse (13, 14) font respectivement partie d'une pièce de tôle (7, 8) non revêtue, notamment non galvanisée, et/ou formée, lesquelles pièces de tôle sont fixées, notamment soudées, à une pièce de tôle (9) constituant la zone centrale, munie d'un revêtement de surface au moins par endroits, notamment galvanisée, et/ou formée.

3. Support d'essieu selon la revendication 2, **caractérisé en ce que** les pièces de tôle (7, 8, 9) assemblées les unes aux autres sont formées à chaque fois par des plaques de tôle qui sont formées ensemble comme pièce composée, notamment au moyen d'un emboutissage ou d'un pressage, pour avoir la géométrie finale de la traverse.

4. Support d'essieu selon la revendication 3, **caractérisé en ce que** les plaques de tôle (7, 8, 9) individuelles et assemblées les unes aux autres ont au moins en partie une épaisseur de matériau différente et/ou une résistance de matériau différente.

5. Support d'essieu selon l'une des revendications précédentes, **caractérisé en ce que** l'au moins une pièce de tôle (9) constituant la zone centrale de traverse a une surface entièrement revêtue, notamment est entièrement galvanisée.

6. Support d'essieu selon l'une des revendications précédentes, **caractérisé en ce que** le support d'essieu (1) comporte plusieurs, notamment deux, traverses (4, 5) qui relient ensemble les deux longerons (2) orientés globalement dans le sens de la longueur du véhicule lorsque le support d'essieu est monté, seule la traverse (4) avant, vue dans le sens de roulage, étant munie d'un revêtement de surface (17).

7. Support d'essieu selon l'une des revendications précédentes, **caractérisé en ce que** les longerons (2) sont fabriqués, au moins dans une zone de longeron associée à la zone de fixation de traverse (13, 14), en un matériau non revêtu, notamment non galvanisé, pouvant être soudé.

8. Support d'essieu selon la revendication 7, **caractérisé en ce qu'**au moins l'un des longerons (2) est fabriqué en une ou plusieurs parties et/ou à partir d'un matériau de tôle, notamment est formé comme une pièce de flan sur mesure par plusieurs pièces de tôle qui sont formées et assemblées les unes aux autres et qui ont de préférence au moins en partie une épaisseur de matériau différente et/ou une résistance de matériau différente.

9. Support d'essieu selon l'une des revendications précédentes, **caractérisé en ce que** le revêtement de surface (17) est un revêtement de surface métallique et/ou **en ce que** le revêtement de surface (17) est un revêtement de surface appliqué de façon chimique et/ou galvanique sur la surface de pièce à revêtir, étant de préférence prévu que le revêtement de surface (17) est formé par une couche de zinc, notamment une couche de zinc pur ou une couche d'alliage de zinc, ou par une couche d'alliage léger, notamment une couche d'alliage d'aluminium.

10. Support d'essieu selon l'une des revendications précédentes, **caractérisé en ce qu'**au moins l'une des zones latérales de fixation de traverse (13, 14) comporte une forme s'écartant de la géométrie plane, notamment est formée par une pièce déformée, pliée et/ou coudée et/ou rabattue, à partir d'un plan de traverse et/ou de plaque et/ou comportant un profil creux et/ou comportant une géométrie de contre-dépouille.

11. Procédé pour la fabrication d'un support d'essieu pour un véhicule, notamment pour un véhicule automobile, selon l'une des revendications précédentes,
**caractérisé en ce que**
- les deux zones latérales de fixation de traverse (13, 14) de l'au moins une traverse (4) ou au moins de l'une des traverses (4) sont formées à chaque fois par une plaque de tôle (7, 8) plane, non revêtue, notamment non galvanisée, lesquelles plaques de tôle sont assemblées, notamment soudées, avant la mise en forme, notamment par emboutissage et/ou pressage, de la traverse (4) dans sa forme définitive, avec une plaque de tôle plane (9) constituant la zone centrale et comportant le revêtement de surface (17), notamment une couche de zinc, de telle sorte que le dispositif de mise en forme reçoit une platine de tôle formée, plane, constituant un produit de départ, comme pièce composée de plusieurs plaques de tôle planes (7, 8, 9) avec des zones latérales non revêtues, notamment non galvanisées, et avec une zone centrale ayant un revêtement de surface, notamment de zinc, au moins par endroits,
- comme pièce composée des plusieurs plaques de tôle planes (7, 8, 9), la platine de tôle formée plane est déformée en une ou plusieurs étapes dans le dispositif de mise en forme, notamment un dispositif d'emboutissage et/ou une presse, pour avoir sa forme définitive, et
- la traverse (4) ainsi fabriquée est soudée, par ses zones de fixation de traverse (13, 14), formées par les zones latérales non revêtues, notamment non galvanisées, au longeron (2) respectivement associé.
